Europäisches Patentamt

**European Patent Office**

**Office européen des brevets**

(11) Numéro de publication : **0 008 252**
**B1**

# (12) FASCICULE DE BREVET EUROPÉEN

(45) Date de publication du fascicule du brevet :
**24.02.82**

(21) Numéro de dépôt : **79400485.3**

(22) Date de dépôt : **10.07.79**

(51) Int. Cl.³ : **B 62 D   5/08**

(54) **Distributeur rotatif hydraulique, en particulier pour mécanismes de direction assistée.**

(30) Priorité : **27.07.78 ES 472088**

(43) Date de publication de la demande :
**20.02.80 (Bulletin 80/04)**

(45) Mention de la délivrance du brevet :
**24.02.82 Bulletin 82/08**

(84) Etats contractants désignés :
**DE FR GB IT SE**

(56) Documents cités :
**FR - A - 2 143 164**
**FR - A - 2 163 723**
**FR - A - 2 184 290**
**FR - A - 2 207 052**
**FR - A - 2 258 296**
**FR - A - 2 308 537**
**FR - A - 2 372 065**

(73) Titulaire : **BENDIBERICA S.A.**
**Balmès 243**
**Barceiona 6 (ES)**

(72) Inventeur : **Bacardit, Juan Simon**
**Calle Mallorca 451 60 4a A**
**Barceiona 13 (ES)**

(74) Mandataire : **Huchet, André et al**
**Service Brevets Bendix 44, rue François 1er**
**F-75008 Paris (FR)**

Imprimerie Jouve, 18, rue St-Denis, 75001 Paris, France

## Distributeur rotatif hydraulique, en particulier pour mécanismes de direction assistée

La présente invention concerne un distributeur rotatif hydraulique, en particulier pour mécanisme de direction assistée.

On connaît de la demande de brevet français FR N°. 2 372 065, un mécanisme de direction assistée comportant un distributeur rotatif hydraulique destiné à contrôler la communication entre une source de pression comportant un orifice haute pression et un orifice basse pression et les compartiments d'un moteur hydraulique à double effet. Le distributeur rotatif comporte de manière classique un premier organe tournant relié à un arbre d'entrée destiné à être rendu solidaire en rotation d'un organe de commande de la direction, et un deuxième organe tournant destiné à être relié au mécanisme de direction. Entre le premier et le deuxième organes tournants sont définies au moins une paire de chambres de travail comportant une première et une deuxième chambres de travail qui sont respectivement reliées à un premier compartiment et à un deuxième compartiment d'un moteur hydraulique d'assistance associé au mécanisme de direction. En réponse à une rotation relative des premier et deuxième organes tournants, l'une des chambres de travail de chaque paire est reliée à l'orifice haute pression de la source de pression tandis que l'autre chambre de travail est reliée à l'orifice basse pression de ladite source. La différence de pression ainsi créée dans le moteur hydraulique engendre une force d'assistance au niveau dudit moteur et cette force est transmise au mécanisme de direction.

Les performances de distributeurs hydrauliques pour direction assistée sont souvent fonction de la forme d'une courbe appelée « courbe caractéristique » qui représente la pression d'actionnement du moteur hydraulique d'assistance en fonction du couple de commande appliqué à l'arbre d'entrée. Cette courbe a de préférence une forme parabolique mais, dans la pratique, elle est approximée par une courbe comportant trois portions sensiblement linéaires adjacentes correspondant respectivement à la conduite en ligne droite, à la conduite dans les virages et à la conduite de manœuvres de stationnement. En particulier, la transition entre les deuxième et troisième portions se caractérise par un changement de pente relativement important de la courbe caractéristique à partir d'une valeur donnée du couple d'entrée.

Le but de la présente invention est de proposer un distributeur hydraulique, en particulier pour mécanisme de direction assistée, dans lequel sont prévus des moyens permettant de façon générale de moduler l'allure de la courbe caractéristique en fonction des souhaits du constructeur du véhicule, et permettant plus particulièrement de déterminer de façon simple les pentes des portions de courbe correspondant respectivement à la conduite en virage et à la conduite de manœuvre de stationnement, ainsi que la valeur du couple d'entrée correspondant au point de transition entre ces deux portions.

Pour ce faire, selon l'esprit de la présente invention, le distributeur comporte des moyens permettant de créer au niveau de l'arbre d'entrée une réaction hydraulique proportionnelle à la pression d'actionnement du moteur hydraulique, et s'opposant à la rotation relative des premier et deuxième organes tournants, et cette réaction hydraulique est croissante jusqu'à ce qu'elle ait atteint une valeur limite proportionnelle à une pression limite, après quoi la réaction hydraulique est maintenue à ladite valeur limite lorsque la pression d'actionnement est supérieure à la pression limite.

Selon une forme de réalisation préférentielle de l'invention, le distributeur comporte également, en combinaison avec les premiers moyens, des seconds moyens destinés à créer une réaction hydraulique supplémentaire au niveau de l'arbre d'entrée également proportionnelle à la pression d'actionnement du moteur hydraulique et s'opposant à la rotation relative des premier et deuxième organes tournants. Ainsi, tant que la pression d'actionnement est inférieure à la valeur limite, les deux réactions hydrauliques s'additionnent. Lorsque la pression d'actionnement dépasse la valeur limite, seule la réaction engendrée par les seconds moyens continue d'augmenter, ce qui implique une modification de la pente de la courbe couple-pression, et cette phase de fonctionnement correspond alors à la conduite de manœuvre de stationnement.

Le distributeur hydraulique selon l'invention comporte un boîtier à l'intérieur duquel sont disposés un premier organe tournant, relié à un arbre d'entrée, et un second organe tournant, coaxial au premier organe tournant et relié à un arbre de sortie, entre lesquels sont définies au moins une paire de chambres de travail comportant une première chambre de travail destinée à être mise en communication avec un premier compartiment d'un moteur hydraulique à double effet, et une deuxième chambre de travail destinée à être mise en communication avec le deuxième compartiment dudit moteur, ledit distributeur étant sensible à une rotation relative de l'un des organes tournants par rapport à l'autre à partir d'une position de repos pour mettre l'une des première ou deuxième chambres de travail en communication avec une source de haute pression et pour mettre l'autre chambre de travail en communication avec une source de basse pression, ledit distributeur étant plus particulièrement caractérisé en ce qu'il comporte un élément rotatif solidaire en rotation de l'un des arbres d'entrée ou de sortie et coopérant avec l'organe tournant relié à l'autre des arbres d'entrée ou de sortie pour définir au moins une paire de chambres de réaction comprenant une première chambre de réaction reliée à la première chambre de travail, et une deuxième chambre de réaction reliée à la deuxième chambre de travail, les chambres de réaction étant disposées de telle sorte que la haute pression transmise à la première ou à la deuxième chambre de réaction par l'intermédiaire de sa chambre de travail associée en réponse à la rotation relative de l'un des organes tournants par rapport à l'autre s'oppose à ladite rotation relative, ledit distributeur comportant également un premier dispositif de contrôle branché entre la première chambre de travail et la première chambre de réaction pour limiter la pression de fluide dans la première chambre de réaction à une valeur maximale prédéterminée, et à un deuxième dispositif de contrôle branché entre la deuxième chambre de travail et la deuxième chambre de réaction pour limiter la pression de fluide dans la deuxième chambre de réaction à ladite valeur maximale.

L'invention sera maintenant expliquée plus en détail et ses avantages apparaîtront à la lumière de la description qui va suivre et qui se réfère aux dessins annexés dans lesquels :

la figure 1 est une coupe longitudinale fragmentaire d'un premier mode de réalisation du distributeur selon l'invention ;

la figure 2 est une vue en coupe transversale selon la ligne 2-2 de la figure 1 ;

la figure 3 est une vue en coupe transversale selon la ligne 3-3 de la figure 1 ;

la figure 4 est une vue schématique dans laquelle on a représenté un certain nombre de passages assurant la communication entre les chambres de travail et les chambres de réaction ;

la figure 5 est une vue en coupe selon la ligne 5-5 de la figure 4, qui illustre un mode de réalisation particulier d'une valve de coupure disposée entre les chambres de travail et les chambres de réaction ;

la figure 6 est une vue en coupe transversale selon la ligne 6-6 de la figure 1 ;

la figure 7 est une vue en coupe transversale selon la ligne 7-7 de la figure 1 ;

la figure 8 est une coupe longitudinale fragmentaire d'un deuxième mode de réalisation de distributeur selon l'invention ;

la figure 9 est une vue en coupe transversale selon la ligne 9-9 de la figure 8 ;

la figure 10 est une vue en coupe transversale selon la ligne 10-10 de la figure 8 ;

la figure 11 est une vue en coupe transversale selon la ligne 11-11 de la figure 8 ;

la figure 12 est une vue en coupe selon la ligne 12-12 de la figure 11 ;

la figure 13 est une coupe longitudinale fragmentaire d'un troisième mode de réalisation de distributeur selon l'invention ; et

la figure 14 est une vue en coupe transversale selon la ligne 14-14 de la figure 13.

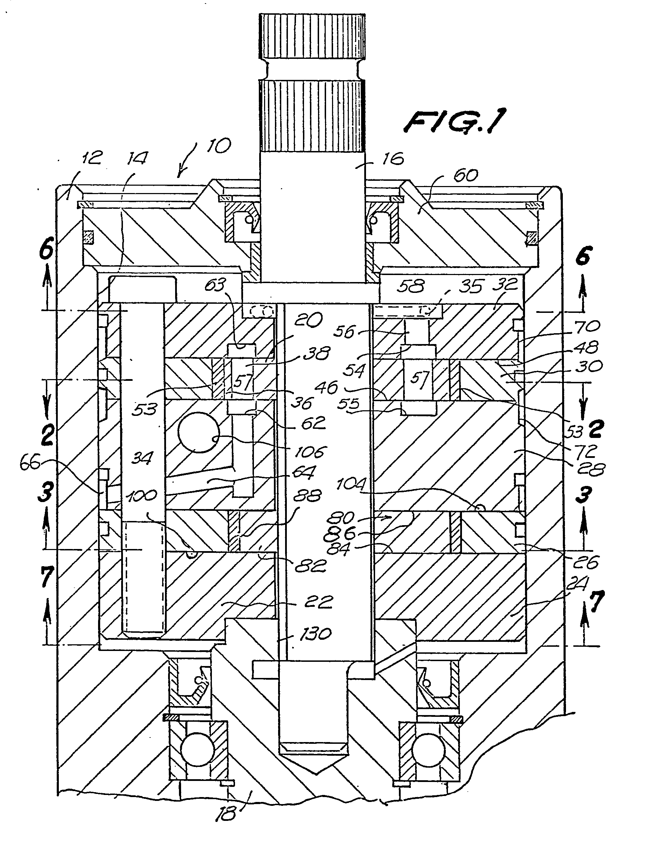

En considérant en premier lieu les figures 1 à 7, on y voit représenté un distributeur rotatif pour direction assistée, désigné de façon générale par la référence 10 et qui comporte un boîtier 12 à l'intérieur duquel est prévu un alésage 14 dans lequel sont disposés coaxiaux un arbre d'entrée 16 et un arbre de sortie 18. L'arbre d'entrée 16 est destiné à être relié à un organe de commande de direction de véhicule, et l'arbre de sortie 18 est destiné à être relié au mécanisme de direction. Dans l'alésage 14 sont disposés un premier organe tournant 20 solidaire en rotation de l'arbre d'entrée 16 et un deuxième organe tournant 22 solidaire en rotation de l'arbre de sortie 18. Le deuxième organe tournant 22 est constitué par cinq pièces annulaires 24, 26, 28, 30, 32 disposées dans cet ordre de bas en haut si l'on considère la figure 1 et solidarisées entre elles par des moyens de liaison axiaux 34 tels que des vis ou éléments similaires. Ces cinq pièces annulaires sont susceptibles d'entrer en rotation dans l'alésage 14 solidairement avec l'arbre de sortie 18. D'autre part, un moyen de centrage élastique (dont l'utilisation est facultative) constitué par un ressort 35 est interposé entre l'arbre d'entrée 16 et la pièce annulaire 32. Ce ressort est destiné à assurer un centrage mécanique et exerce un couple de rappel en réponse à la mise en rotation de l'arbre d'entrée. La pièce annulaire 30 disposée entre les pièces annulaires 28 et 32 a une forme de couronne, de manière à définir une ouverture centrale limitée par une paroi intérieure cylindrique 36. Ainsi, les pièces 28 et 32 et la pièce intermédiaire 30 coopèrent pour définir une cavité 38 sensiblement en forme de disque et traversée selon son axe de symétrie par l'arbre d'entrée 16.

L'organe tournant ou rotor 20 est monté en rotation dans la cavité 38. Il comporte un noyau central 40 à partir duquel font saillie radialement vers l'extérieur une pluralité de branches qui coopèrent avec les parois de ladite cavité 38 pour séparer cette dernière en un certain nombre de chambres qui seront décrites plus en détail ci-après. Les branches du rotor 20 comportent un premier groupe de branches 42 de grande longueur dont les extrémités présentent une portion de surface cylindrique de grand rayon de courbure coopérant de façon étanche avec une portion de surface cylindrique en vis-à-vis de la paroi intérieure cylindrique 36. Les branches du rotor 20 comportent également un deuxième groupe de branches 44 de longueur inférieure aux branches 42 et dont les extrémités présentent une portion de surface cylindrique de plus petit rayon de courbure coopérant de façon étanche avec une portion de surface cylindrique en vis-à-vis de la paroi intérieure cylindrique 36. Les branches 42 et 44 du rotor sont alternativement réparties autour du noyau 40 et coopèrent avec les faces d'extrémités 46 et 48 et la paroi circonférentielle 36 de la cavité 38 pour diviser cette dernière en une pluralité de chambres de travail groupées deux à deux 50 et 52 prévues pour être reliées respectivement au premier et au second compartiments d'un moteur hydraulique d'assistance à double effet (non représenté). Des joints d'étanchéité 53 convenablement disposés dans des gorges de la paroi cylindrique ou des extrémités des branches du rotor assurent la séparation étanche entre les chambres de travail consécutives de la cavité. Lorsque le système occupe sa position de repos, chacune des branches 42 recouvre un orifice 54 défini dans la paroi 48 et qui communique avec un orifice de basse pression (non représenté) du boîtier 12, par un passage 56 de la pièce annulaire 32 et une chambre annulaire 58 définie entre la pièce 32 et le couvercle 60 du boîtier 12. De la même façon, chaque branche 44 recouvre un orifice en vis-à-vis 62 défini dans la paroi 46 de la pièce 28 et communiquant avec un orifice haute pression (non représenté), par l'intermédiaire d'un passage 64 et d'une gorge 66 de ladite pièce annulaire 28. En outre, chacun des orifices 54 et 62 est respectivement en communication avec une cavité complémentaire 55 et 63 définie dans les parois 46 ou 48, par l'intermédiaire de passages axiaux 57 formés dans les branches du rotor 20. Dans la position de repos du distributeur, les branches 42 et 44 ne recouvrent pas totalement les ouvertures 54 et 62 de manière à permettre une communication de fluide entre chaque chambre 50 et 52 et les orifices haute pression et basse pression. Lorsque le rotor 20 entre en rotation dans la cavité 38, le distributeur se comporte comme une valve à centre ouvert de type classique de manière à provoquer une augmentation de pression dans les chambres de travail (les chambres 50 par exemple) en communication avec l'un des compartiments du moteur hydraulique d'assistance, tandis que les chambres de travail en communication avec l'autre compartiment (les chambres 52) sont en communication non restreinte avec l'orifice basse pression. On remarquera que, pour faciliter la compréhension des dessins, on a représenté en traits pointillés sur la figure 2 un certain nombre de passages de fluide qui ne sont pas situés dans le plan de coupe, tels que les passages 64, et également les passages de sortie respectifs 67 et 68 des chambres de travail 50 et 52, qui communiquent avec des gorges annulaires 70 et 72 de l'organe tournant 22 qui sont respectivement reliés au premier et au deuxième compartiments du moteur hydraulique.

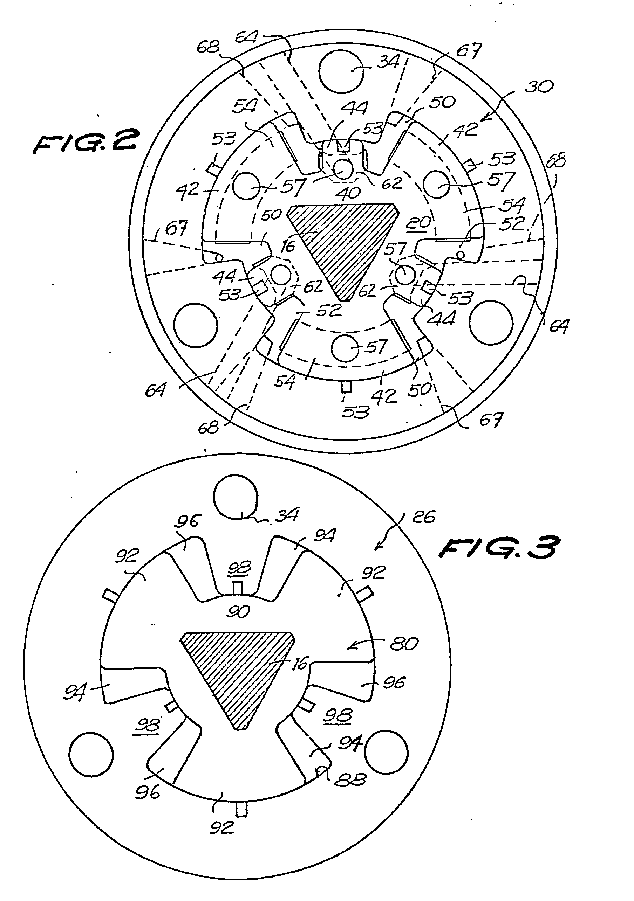

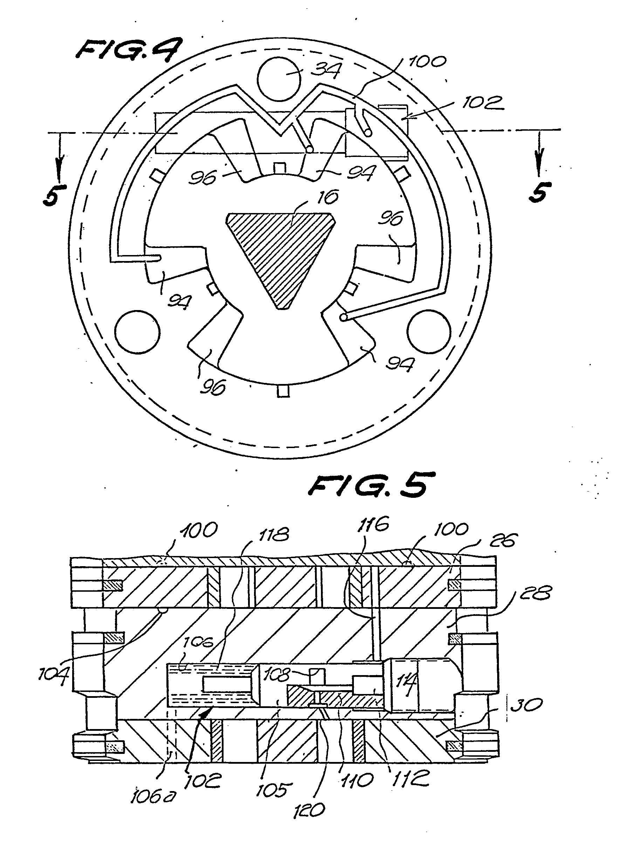

Le distributeur hydraulique comporte également un élément rotatif 80 solidaire en rotation de l'arbre d'entrée 16 et coopérant avec l'organe tournant 22 pour définir avec ce dernier une pluralité de chambres de réaction dont la structure et la fonction seront expliquées plus en détail ci-après. L'élément rotatif est ici constitué par un autre rotor fixé sur l'arbre d'entrée 16 et disposé rotatif dans une cavité 82 sensiblement en forme de disque, et limitée par les faces en vis-à-vis 84 et 86 des pièces 24 et 28 et par la paroi cylindrique interne 88 de la pièce 26 en forme de couronne. Si l'on considère plus particulièrement la figure 3, le rotor 80 a une forme d'étoile et comporte un noyau central 90 à partir duquel font saillie plusieurs branches 92 orientées radialement et dont les extrémités présentent des portions de surface cylindrique susceptibles de glisser de façon étanche sur la surface 88. Les branches 92 divisent la cavité en une pluralité de compartiments limités par le bord cylindrique externe du noyau 90 et le bord cylindrique interne de la cavité. Chaque compartiment est lui-même divisé en une première 94 et une deuxième 96 chambres de réaction par un bras de séparation 98 faisant saillie radialement à l'intérieur de la pièce 26 et venant coopérer de façon étanche avec le bord cylindrique externe du noyau 90. Les chambres de réaction 94 sont normalement en communication avec les chambres de travail 50. De même les chambres de réaction 96 sont normalement en communication avec les chambres de travail 52. On remarquera que sur la figure 3, on a omis volontairement de représenter une rainure 100 destinée à alimenter en fluide sous pression la chambre de réaction. Cette rainure sera décrite en se référant à la figure 4.

Si l'on considère maintenant la figure 4, on y voit représentée une vue similaire à celle de la figure 3 mais sur laquelle on a indiqué le passage de fluide alimentant les chambres de réaction 94, ce passage étant ici constitué par la rainure 100 précédemment mentionnée qui est prévue dans la face 84 de la pièce 24 et est reliée aux chambres de travail 50 par des passages prévus dans les pièces 26 et 28. Un dispositif de contrôle est disposé sur le chemin d'écoulement de fluide entre une des chambres de travail 50 et la rainure 100 pour limiter la pression de fluide transmise à la chambre de réaction à une valeur maximale prédéterminée. Ce dispositif de contrôle est ici constitué par une valve de coupure intégrée dans la pièce 28 et désignée schématiquement par la référence 102 sur la figure 4. Bien entendu, si l'on considère la figure 4 en liaison avec la figure 1, on se rend compte que la valve de coupure 102 qui est montée dans un alésage borgne 106 de la pièce 28 est disposée en avant du plan de coupe de la figure 4. De la même manière, les chambres de réaction 96 sont reliées aux chambres de travail 52 par une rainure 104 définie dans la face 86 de la pièce 28 et par un passage de fluide de la pièce 28, avec une valve de coupure (non représentée sur la figure 4) identique à la valve de coupure 102 disposée dans ledit passage de fluide.

Si l'on considère maintenant la figure 5 qui représente une vue en coupe selon la ligne 5-5 de la figure 4, on y voit de façon détaillée la valve de coupure 102 incorporée dans la pièce 28. La valve 102 comporte un tiroir 105 monté dans l'alésage borgne 106 de la pièce 28. Le tiroir 105 comporte une gorge annulaire 108 en communication avec un passage central 110 qui débouche dans une chambre de sortie 112 refermée par un bouchon 114. La chambre de sortie 112 est en communication avec la rainure 100 par un passage 116. En position de repos, le tiroir est sollicité contre le bouchon 114 sous l'influence d'un ressort 118 disposé au fond de l'alésage borgne. La gorge annulaire 108 est alors située en face d'un passage 120 en communication avec les chambres de travail 50.

Les chambres de travail 50 et les chambres de réaction 94 sont alors en communication. Si en réponse à une rotation relative de l'arbre d'entrée 16 par rapport à l'arbre de sortie 18, la pression augmente dans les chambres de travail 50, cette augmentation de pression est transmise aux chambres de réaction 94 et la pression d'actionnement engendre alors au niveau des rotors 20 et 80 des réactions hydrauliques qui s'additionnent et qui augmentent en fonction de la haute pression qui est transmise dans les chambres de travail.

Lorsque la pression de travail a atteint une valeur limite prédéterminée suffisante pour déplacer le tiroir 105 à l'encontre du ressort 118, la communication de fluide entre les chambres de travail 50 et les chambres de réaction associées 94 est interrompue. Si la pression de travail continue d'augmenter au-delà de cette valeur limite, la pression dans les chambres de réaction 94 ne varie plus et l'augmentation de la pression de travail ne provoque une augmentation de la réaction hydraulique qu'au niveau du rotor 20.

Etant donné qu'à la pression limite prédéterminée correspond un couple d'entrée donné, il en résulte que la réaction hydraulique au niveau du rotor 80 cesse d'augmenter pour des valeurs du couple supérieures au couple d'entrée donné. Ceci se traduit par une augmentation notable de la pente de la caractéristique du distributeur à partir de l'instant où le couple d'entrée devient supérieur à ladite valeur donnée qui détermine le point de transition entre la portion de caractéristique correspondant à la conduite en virage et la portion adjacente qui correspond à la conduite de manœuvre de stationnement.

Il est bien évident que la deuxième valve de coupure (non représentée) identique à la première valve de coupure 102 est également intégrée dans la pièce 28. Cette deuxième valve de coupure fonctionne de manière identique en cas d'augmentation de la pression dans les chambres de travail 52 et dans les chambres de réaction 96. Ainsi la caractéristique du distributeur hydraulique est parfaitement symétrique.

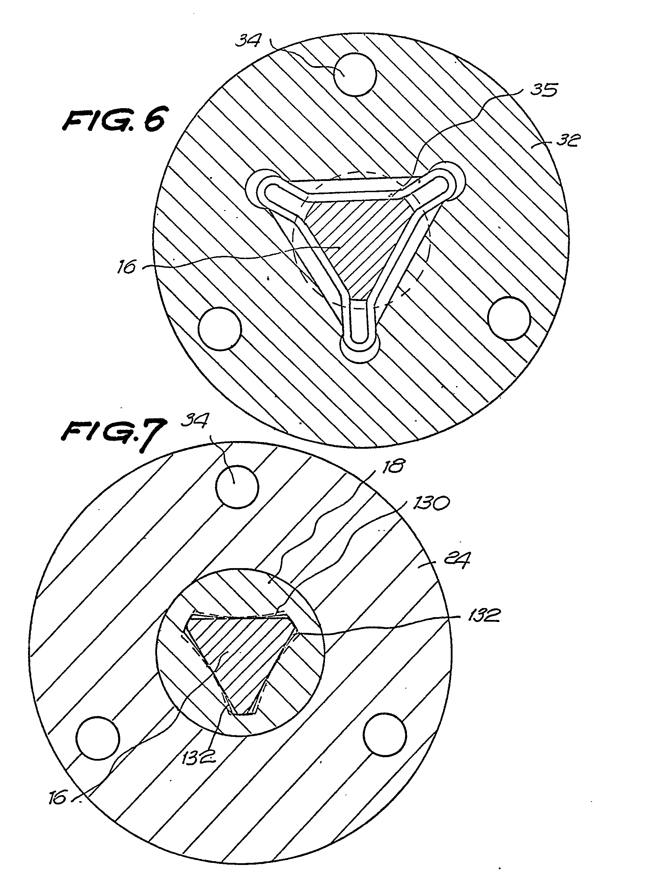

Si l'on considère maintenant la figure 6 qui est une vue en coupe selon la ligne 6-6 de la figure 1, on y voit le ressort 35 qui est constitué par une boucle fermée en forme de triangle, fixée rigidement sur l'arbre d'entrée 16 dont la section a également une forme de triangle. Aux sommets de la boucle élastique triangulaire sont formées trois protubérances venant s'encastrer dans des logements correspondants de la pièce annulaire 32.

Sur la figure 7, qui est une vue en coupe selon la ligne 7-7 de la figure 1, on voit l'arbre d'entrée 16 à section triangulaire qui pénètre dans une ouverture 130 de l'arbre de sortie 18. Une rotation limitée de l'arbre 16 est autorisée dans l'ouverture 130, jusqu'à ce que les faces 132 viennent au contact avec les bords de l'ouverture 130 pour assurer une commande mécanique directe entre l'arbre d'entrée et l'arbre de sortie en cas de panne d'assistance.

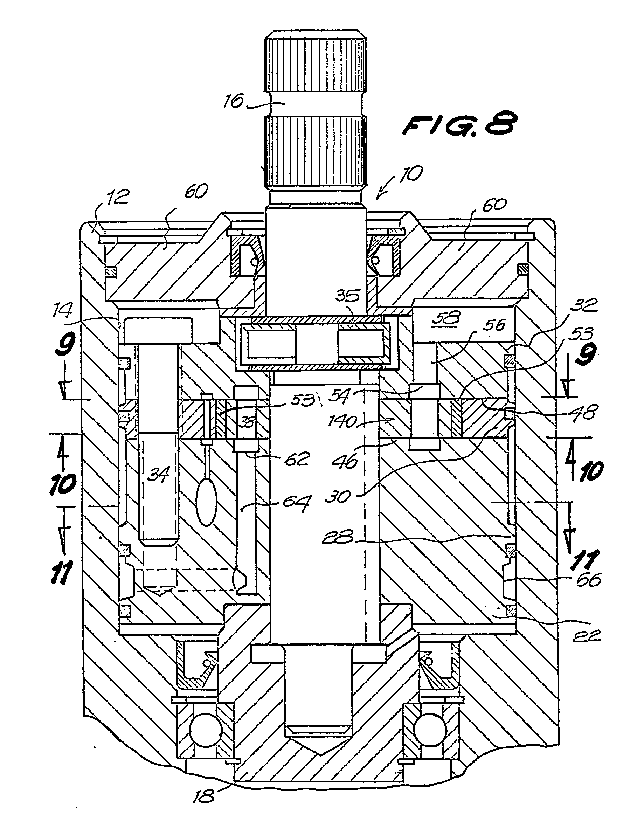

Les figures 8 à 12 représentent un autre mode de réalisation de l'invention dont la structure est sensiblement similaire à celle du distributeur selon les figures 1 à 7, à l'exception du fait que les rotors 20 et 80 ont été remplacés par un seul rotor en forme d'étoile qui est monté en rotation dans une cavité en forme de disque de l'organe tournant fixé en rotation à l'arbre de sortie. Pour des besoins de simplification, les éléments des figures 8 à 12 qui sont identiques ou similaires à ceux des figures 1 à 7, ont été désignés par les mêmes références numériques.

Si l'on considère plus particulièrement la figure 8, l'organe tournant 22 solidaire de l'arbre de sortie 18 est ici constitué uniquement par trois pièces annulaires 28, 30 et 32, fixées par des éléments de liaison 34. Une cavité en forme de disque 38 est définie à l'intérieur de l'organe tournant et un rotor 140 fixé à l'arbre d'entrée est susceptible d'entrer en rotation dans la cavité 38 en réponse à l'actionnement de l'arbre d'entrée 16.

La figure 9 qui est une vue en coupe selon la ligne 9-9 de la figure 8, montre plus en détail la forme du rotor 140 et sa coopération en rotation avec la cavité 38. Le rotor 140 comporte un noyau central 142 à partir duquel fait saillie radialement vers l'extérieur une pluralité de branches 42, 44 qui coopèrent avec les parois de la cavité 38 pour définir d'une part une pluralité de chambres de travail séparées en un groupe de premières chambres de travail 50 et en un groupe de deuxièmes chambres de travail 52, et d'autre part une pluralité de chambres de réaction également séparées en un groupe de premières chambres de réaction 94 et un groupe de deuxièmes chambres de réaction 96.

De façon plus précise, les branches du rotor divisent la cavité en une pluralité d'espaces dont deux d'entre eux sont subdivisés de façon étanche par des bras 98 faisant saillie radialement dans la cavité à partir de la pièce 30 pour définir les chambres de réaction 94 et 96. Les autres espaces de la cavité situés entre les branches du rotor constituent les chambres de travail 50 et 52 qui sont réparties alternativement autour du noyau. Chaque paire de chambres de travail 50, 52 est constituée par les espaces intermédiaires définis dans la cavité et bordés par une branche centrale 44 et par deux branches latérales 42 immédiatement voisines de la branche centrale. Selon le mode de réalisation de la figure 8, les branches dites centrales 44 sont de longueur plus petite que les branches dites latérales 42 de manière à ce que la pression créée dans les chambres de travail 50 ou 52 engendre une réaction hydraulique sur le rotor 142. Comme pour le distributeur hydraulique des figures 1 à 7, les branches 42 et 44 coopèrent avec des ouvertures 54 et 62 respectivement en communication avec un orifice basse pression et un orifice haute pression. Sur la figure 9, on a également représenté en traits pointillés des passages de fluide 150 et 152 destinés à mettre en communication une des chambres de travail 52 avec une des chambres de réaction 96. Le passage 150 est directement en communication avec la chambre de travail 52 et le passage 152 est directement en communication avec la chambre de réaction 96. Une valve de coupure (non représentée) intégrée dans l'organe tournant 22 et sensiblement identique à celle représentée sur la figure 5, est disposée entre les passages 150 et 152.

De façon identique, des passages 154 et 156 sont respectivement en communication avec une des chambres de travail 50 et une des chambres de réaction 94, avec une valve de coupure identique aux précédentes disposée entre lesdits passages. Bien entendu, les passages 150, 152, 154 et 156 ne sont pas totalement situés dans le plan de coupe de la figure 9, mais n'y ont été représentés que pour faciliter la compréhension de la structure du distributeur. On remarquera en outre que la figure 8 est une vue en coupe selon la ligne 8-8 de la figure 9.

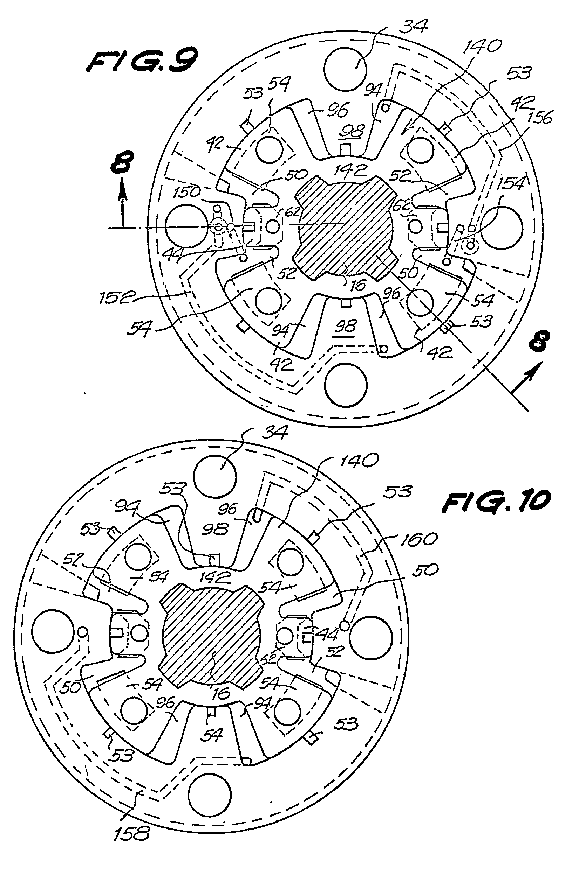

La figure 10, qui est une vue en coupe selon la ligne 10-10 de la figure 8, montre également la séparation de la cavité 38 en chambres de travail 50, 52 et en chambres de réaction 94 et 96. En outre, on y a représenté en traits pointillés des passages 158 et 160 destinés à alimenter les deux autres chambres de réaction 94 et 96 en fluide sous pression provenant de leurs valves de coupure correspondantes.

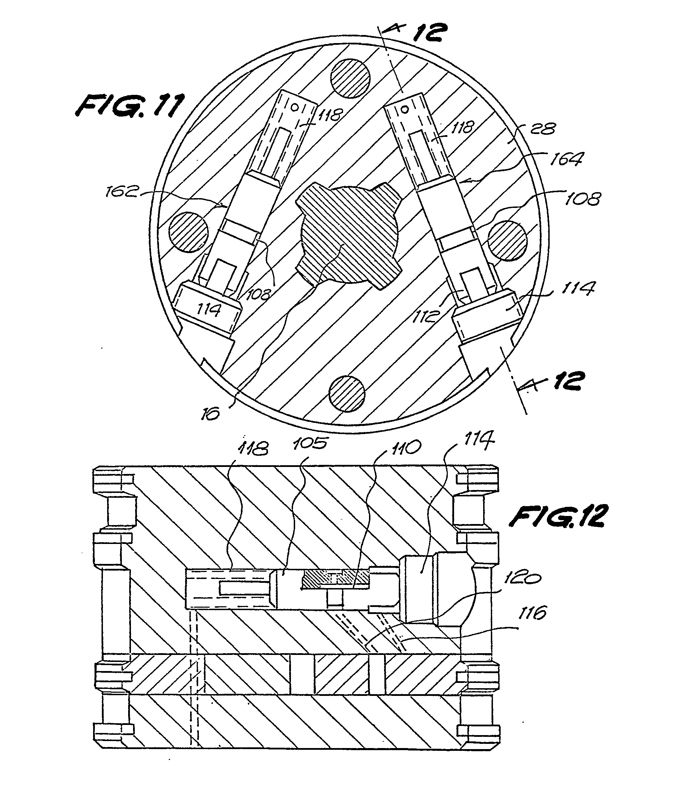

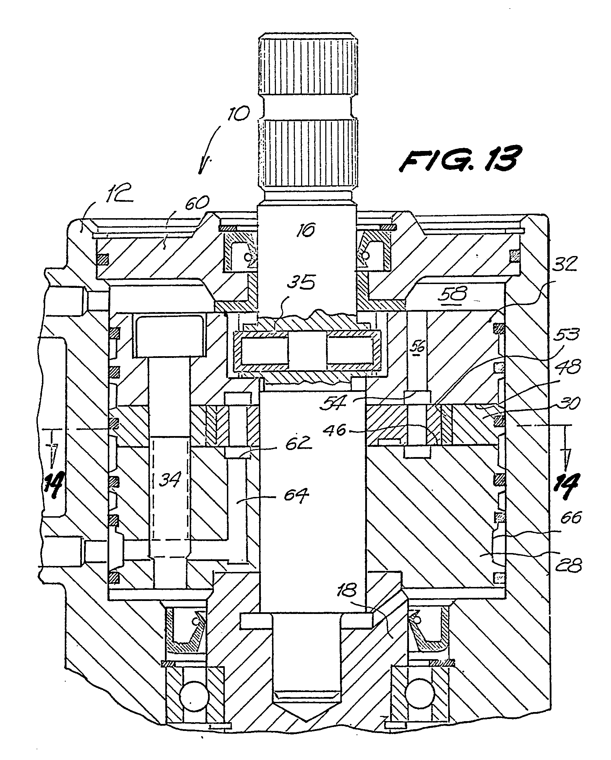

Les figures 11 et 12 illustrent l'implantation des valves de coupure 162 et 164 disposées respectivement entre les premières chambres de travail 50 et les premières chambres de réaction 94 et entre les deuxièmes chambres de travail 52 et les deuxièmes chambres de réaction 96. Chacune des valves de coupure a une structure semblable à la valve décrite en se référant à la figure 5 et les éléments identiques à ceux de la figure 5 sont désignés par les mêmes références numériques.

Le fonctionnement du distributeur illustré sur les figures 8 à 12 est sensiblement identique à celui illustré sur les figures 1 à 7. Par exemple, en cas de rotation du rotor 140 dans le sens horaire si l'on considère la figure 9, la haute pression s'établit dans les chambres de travail 52 et également dans les chambres de réaction 96 et il se produit une réaction hydraulique proportionnelle à la haute pression et tendant à s'opposer à la rotation du rotor 140. Lorsque la haute pression dépasse la pression de coupure de la valve 162, cette dernière se referme et l'augmentation de pression n'est plus transmise qu'aux chambres de travail 52, ce qui a pour conséquence une diminution du taux d'augmentation de la réaction hydraulique en fonction de la pression et une augmentation de la pente de la caractéristique du distributeur. Le distributeur fonctionne de manière identique en cas de rotation du rotor 140 dans le sens anti-horaire. Dans ce cas, les chambres de travail 50 et les chambres de réaction 94 sont alimentées en haute pression et la valve de coupure interrompt la communication entre les deux séries de chambres quand la haute pression dépasse la valeur limite prédéterminée.

On remarquera que, bien que les modes de réalisation de distributeur jusque-là décrits comportent des valves de coupure intégrées à l'intérieur de l'élément tournant 22 relié à l'arbre de sortie 18, l'invention s'applique également à des distributeurs hydrauliques de structure semblable dans lesquels les valves de coupure seraient disposées extérieurement au boîtier 12 et alimentées par des canalisations extérieures.

En outre, bien que les valves de coupure décrites aient une pression de coupure déterminée par la tension des ressorts 118, on peut tout aussi bien imaginer que la pression de coupure pourrait être modulée selon les désirs de l'utilisateur ou en fonction de paramètres caractéristiques du fonctionnement du véhicule. Pour ce faire, il suffirait d'appliquer aux tiroirs 105 une pression ou une force modulée destinée à contrebalancer l'action de la pression dans la chambre de sortie 112, de la même façon que les ressorts 118.

D'autre part, bien que les distributeurs selon les figures 1 à 12 soient du type à centre ouvert, il est bien évident que l'invention s'applique tout aussi bien à des distributeurs à centre fermé. Pour ce faire, il suffit que dans la position de repos du rotor disposé dans la cavité 38, les bras 42 recouvrent totalement les ouvertures 54 tandis que les bras 44 recouvrent totalement les ouvertures 62.

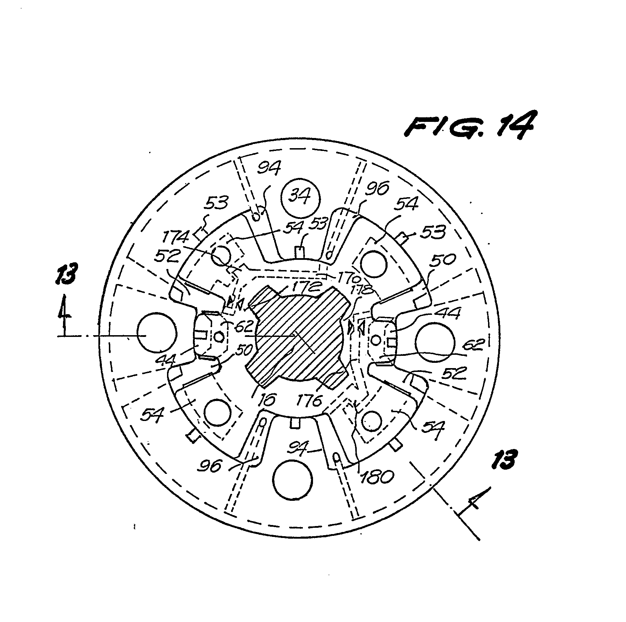

Les figures 13 et 14 représentent un troisième mode de réalisation du distributeur selon l'invention, dans lequel les dispositifs de contrôle de la communication de fluide entre les chambres de travail 50, 52 et les chambres de réaction 94, 96 qui leur sont associées n'est plus effectuée par des valves de coupure. Les éléments des figures 13 et 14 qui sont identiques ou similaires à ceux des figures 8 à 12 sont désignés par les mêmes références numériques. Une rainure 170 formée dans une des faces du rotor définit un passage de fluide entre l'une des chambres de travail 52 et l'une des chambres de réaction 96. Le passage de fluide est séparé en une partie amont, en communication avec la chambre de travail 52, et en partie aval en communication avec la chambre de réaction 96, par un étranglement 172. La partie aval comporte un passage de fuite constitué ici par une encoche 174. Lorsque le rotor en forme d'étoile occupe sa position de repos, le passage de fuite est fermé par la face 46 de la pièce 28. Lorsque le rotor se déplace en rotation dans le sens anti-horaire d'un angle ayant une valeur supérieure à une valeur prédéterminée, le passage de fuite constitué par l'encoche 174 est mis progressivement en communication avec une source de basse pression. Pour ce faire, l'encoche 174 est prévue pour venir en recouvrement de l'orifice 54. En outre, l'encoche 174 ou l'orifice 54 présente un chanfrein destiné à moduler la section du passage de fuite en fonction de la position angulaire du rotor.

Le fonctionnement du dispositif de coupure s'effectue en deux temps : dans une première phase, le rotor se déplace d'une valeur d'angle inférieure à la valeur prédéterminée. La haute pression qui règne dans la chambre de travail 52 est intégralement transmise à la chambre de réaction 96. Si la rotation du rotor augmente de telle sorte que l'écart angulaire par rapport à la position de repos dépasse la valeur prédéterminée, le passage de fuite est alors ouvert et la restriction et le chanfrein sont calculés de telle sorte que la pression dans la chambre de réaction 96 n'augmente plus, en dépit de l'augmentation de la pression dans la chambre de travail 52. Etant donné que les chambres de réaction 96 sont reliées entre elles, il en résulte que la pression dans ces dernières est alors limitée à une valeur maximum.

De façon identique, une des chambres de travail 50 et une des chambres de réaction 94 sont reliées par un passage de fluide constitué par une autre rainure 176 de la face du rotor étoilé. Le passage de fluide comporte un étranglement 178 et un passage de fuite identique constitué par une encoche 180 identique à l'encoche 174, et qui coopère avec l'orifice 54 en vis-à-vis.

Pour terminer la description, on précisera que dans les modes de réalisation décrits, un certain nombre d'orifices 54 et 62 et de passages de fluide ont été représentés dans le même plan, bien qu'une telle représentation ne corresponde pas à la réalité ; celle-ci a été utilisée uniquement dans le but de faciliter la compréhension de la structure et du fonctionnement des distributeurs hydrauliques.

On remarquera que les pièces constitutives des valves selon la présente invention peuvent être obtenues par des procédés de fabrication simples et relativement peu onéreux tels que le frittage par exemple. En outre, la structure de la valve permet une facilité de montage et d'introduction dans le boîtier de direction du véhicule sans modification notoire de ce dernier.

Enfin, on remarquera que le dispositif selon l'invention n'est pas limité à l'utilisation d'un dispositif de réaction unique susceptible d'être commandé en pression jusqu'à une valeur limite prédéterminée. Au contraire, dans le cas où l'on souhaite obtenir une caractéristique de distributeur présentant un nombre plus grand de portions linéaires adjacentes, il est possible d'utiliser un nombre convenable de dispositifs de réaction dont les pressions de coupure respectives correspondent chacune à un point de transition de ladite caractéristique.

**Revendications**

1. Distributeur rotatif hydraulique pour mécanisme de direction assistée, comportant un boîtier à l'intérieur duquel sont disposés un premier organe tournant (20) relié à un arbre d'entrée (16), et un second organe tournant (22) coaxial au premier organe tournant et relié à un arbre de sortie (18), entre lesquels sont définies au moins une paire de chambres de travail (50, 52) comportant une première chambre de travail destinée à être mise en communication avec un premier compartiment d'un moteur hydraulique à double effet, et une deuxième chambre de travail destinée à être mise en communication avec le deuxième compartiment dudit moteur, ledit distributeur étant sensible à une rotation relative de l'un des organes tournants par rapport à l'autre à partir d'une position de repos pour mettre l'une des premières ou deuxième chambres de travail en communication avec une source de haute pression et pour mettre l'autre chambre de travail en communication avec une source de basse pression, ledit distributeur étant caractérisé en ce qu'il comporte au moins un élément rotatif (80 ou 140) solidaire en rotation de l'un des arbres d'entrée ou de sortie et coopérant avec l'organe relié à l'autre des arbres d'entrée ou de sortie pour définir au moins une paire de chambres de réaction (94, 96) comprenant une première chambre de réaction reliée à la première chambre de travail, et une deuxième chambre de réaction reliée à la deuxième chambre de travail, les chambres de réaction étant disposées de telle sorte que la haute pression transmise à la première ou à la deuxième chambre de réaction par l'intermédiaire de sa chambre de travail associée en réponse à la rotation relative de l'un des organes tournants par rapport à l'autre s'oppose à ladite rotation relative, ledit distributeur comportant également un premier dispositif de contrôle (102 ou 180) branché entre la première chambre de travail et la première chambre de réaction pour limiter la pression de fluide dans la première chambre de réaction à une valeur prédéterminée, et à un deuxième dispositif de contrôle (102 ou 174) branché entre la deuxième chambre de travail et la deuxième chambre de réaction pour limiter la pression de fluide dans la deuxième chambre de réaction à ladite valeur maximale.

2. Distributeur hydraulique selon la revendication 1, caractérisé en ce que l'élément rotatif est constitué par un premier rotor (80) en forme d'étoile comportant un noyau central (90) solidaire en rotation de l'arbre d'entrée (16) et une pluralité de branches (92) faisant saillie radialement vers l'extérieur à partir de ce noyau, ledit rotor étant monté en rotation dans une première cavité en forme de disque définie dans l'organe tournant (22) relié à l'arbre de sortie (18), chacun des espaces de la cavité compris entre deux branches consécutives étant divisé par un bras radial de séparation (98) solidaire de l'organe tournant relié à l'arbre de sortie en deux chambres (94, 96) constituant une première et une deuxième chambres de réaction, chacune des premières chambres de réaction étant susceptible de recevoir une pression de fluide agissant sur les branches du rotor pour le solliciter en rotation dans un premier sens et chacune des deuxièmes chambres de réaction étant susceptible de recevoir une pression de fluide agissant sur les branches du rotor pour solliciter ce dernier en rotation dans un second sens.

3. Distributeur rotatif hydraulique selon la revendication 2, caractérisé en ce que le premier organe tournant est constitué par un deuxième rotor (20) en forme d'étoile comportant un noyau central (40) solidaire en rotation de l'arbre d'entrée (16) et une pluralité de branches (42, 44) faisant saillie radialement vers l'extérieur à partir de ce noyau central, ledit rotor étant monté en rotation dans une deuxième cavité en forme de disque définie dans l'organe tournant (22) relié à l'arbre de sortie (18), chacun des espaces de la deuxième cavité compris entre deux branches consécutives du deuxième rotor définissant une chambre de travail (50 ou 52), lesdites chambres de travail étant distribuées angulairement de telle sorte que deux chambres de travail consécutives constituent respectivement l'une des premières chambres de travail et l'une des deuxièmes chambres de travail.

4. Distributeur rotatif hydraulique selon la revendication 3, caractérisé en ce que deux branches radiales (42, 44) consécutives du deuxième rotor (20) ont des longueurs différentes, de telle sorte que la pression qui règne dans la chambre de travail bordée par les deux branches en réponse à une rotation relative du premier et du deuxième organes tournants, crée un couple de rotation agissant sur le deuxième rotor.

5. Distributeur rotatif hydraulique selon la revendication 1, caractérisé en ce que le premier organe tournant et l'élément rotatif sont constitués par un rotor unique (140) en forme d'étoile qui comporte un noyau central (142) solidaire en rotation de l'arbre d'entrée (16) et une pluralité de branches (42, 44) faisant saillie radialement vers l'extérieur à partir de ce noyau, ledit rotor étant monté en rotation dans une cavité sensiblement en forme de disque définie à l'intérieur du deuxième organe tournant (22), lesdites branches coopérant avec les parois de ladite cavité pour définir d'une part une pluralité de chambres de travail (50, 52) séparées en un groupe de premières chambres de travail et un groupe de deuxièmes chambres de travail, et d'autre part une pluralité de chambres de réaction (94, 96) également séparées en un groupe de premières chambres de réaction et un groupe de deuxièmes chambres de réaction.

6. Distributeur rotatif hydraulique selon la revendication 5, caractérisé en ce que les branches du rotor étoilé divisent la cavité en une pluralité d'espaces, certains de ces espaces intermédiaires étant séparés de façon étanche en deux compartiments définissant une paire de chambres de réaction par un bras (98) faisant saillie radialement dans la cavité à partir du deuxième organe tournant (22), les autres espaces intermédiaires formant les premières et deuxièmes chambres de travail réparties de manière alternative autour du noyau.

7. Distributeur rotatif hydraulique selon la revendication 6, caractérisé en ce que chaque paire de chambres de travail est constituée par les espaces intermédiaires respectifs définis dans la cavité et bordés par une branche dite centrale (44) et deux branches dites latérales (42) immédiatement voisines de la branche centrale et situées de part et d'autre de cette dernière.

8. Distributeur rotatif hydraulique selon la revendication 7, caractérisé en ce que chaque branche centrale (44) recouvre un orifice haute pression (62) en communication avec la source de haute pression et défini dans la paroi interne de la cavité, et en ce que chaque branche latérale (42) recouvre un orifice basse pression (54) également définie dans la paroi interne de la cavité et en communication avec la source de basse pression, la communication de fluide entre les chambres de travail d'une part, et les sources de haute et basse pression d'autre part, étant fonction de la position angulaire du rotor étoilé (140) dans la cavité.

9. Distributeur rotatif hydraulique selon la revendication 7 ou 8, caractérisé en ce que la branche centrale (44) a une longueur inférieure aux branches latérales (42) de telle sorte que la haute pression de fluide communiquée à l'une ou l'autre des chambres de travail (50, 52) exerce sur le rotor une réaction hydraulique.

10. Distributeur rotatif hydraulique selon l'une quelconque des revendications 1 à 9, caractérisé en ce que le premier et le deuxième dispositifs de contrôle sont respectivement constitués par une première valve de coupure (102, 162) disposée entre la première chambre de travail (50) et la première chambre de réaction (94) d'une part, et par une deuxième valve de coupure (164) disposée entre la deuxième chambre de travail (52) et la deuxième chambre de réaction (96) d'autre part, les première et deuxième valves de coupure étant prévues pour interrompre la communication de fluide entre chaque chambre de travail et sa chambre de réaction associée lorsque la pression dans l'une ou l'autre des chambres de travail est supérieure à ladite valeur maximale.

11. Distributeur rotatif hydraulique selon la revendication 10, caractérisé en ce que la valeur maximale est fixe.

12. Distributeur rotatif hydraulique selon la revendication 10, caractérisé en ce que la valeur maximale est variable en fonction des paramètres de fonctionnement du véhicule.

13. Distributeur rotatif hydraulique selon la revendication 10, caractérisé en ce que les valves de coupure sont intégrées dans l'un (22) des organes tournants.

14. Distributeur rotatif hydraulique selon l'une quelconque des revendications 5 à 9, caractérisé en ce que chaque dispositif de contrôle est constitué par un passage de fluide (170, 176) prévu dans le rotor et reliant une chambre de travail et la chambre de réaction qui lui est associée, ledit passage de fluide comportant un étranglement (172, 178) séparant ledit passage en une portion amont située entre la chambre de travail et l'étranglement et une portion aval située entre l'étranglement et la chambre de réaction, un passage de fuite (174, 180) étant défini à partir de la portion aval du passage de fluide, ledit passage de fuite étant normalement fermé lorsque le rotor accuse, par rapport à sa position de repos, un écart angulaire inférieur à une valeur donnée, et s'ouvrant progressivement pour mettre la portion aval du passage de fluide en communication avec la source de basse pression au fur et à mesure que l'écart angulaire augmente au-delà de ladite valeur donnée.

15. Distributeur rotatif hydraulique selon la revendication 14 en combinaison avec la revendication 8, caractérisé en ce que le passage de fuite est constitué par une encoche (174, 180) définie dans une des faces du rotor, ladite encoche étant en communication avec la portion aval du passage de fluide, et étant susceptible de venir en recouvrement de l'orifice basse pression (54) défini dans la paroi de la cavité au fur et à mesure que l'écart angulaire augmente au-delà de ladite valeur donnée pour autoriser une fuite de fluide vers l'orifice basse pression.

16. Distributeur rotatif hydraulique selon la revendication 15, caractérisé en ce qu'un chanfrein est formé dans l'encoche pour moduler la section du passage de fuite en fonction de la position angulaire du rotor.

17. Distributeur rotatif hydraulique selon la revendication 1, caractérisé en ce que lesdits premier et second dispositifs de contrôle (102) sont disposés à l'extérieur du boîtier (12) du distributeur et reliés à celui-ci par des canalisations extérieures.

**Claims**

1. A hydraulic rotary distributor for power-assisted steering mechanism, comprising a housing inside which are disposed a first rotary member (20) connected to an input shaft (16), and a second rotary member (22), coaxial to the first rotary member and connected to an output shaft (18), between which are defined at least one pair of working chambers (50, 52) comprising a first working chamber intended to be put into communication with a first compartment of a double-action hydraulic motor and a second working chamber intended to be put into communication with the second compartment of the said motor, the said distributor being responsive to a relative rotation of one of the rotary members in relation to the other from a non-operating position so as to put one of the first and second working chambers in communication with a source of high pressure and so as to put the other working chamber in communication with a source of low pressure, the said distributor being characterized in that it comprises at least one rotary element (80 or 140) solid in rotation with one of said input and output shafts and cooperating with the rotary member connected to the other of said shafts so as to define at least one pair of reaction chambers (94, 96) comprising a first reaction chamber connected to the first working chamber, and a second reaction chamber connected to the second working chamber, the reaction chambers being disposed in such a way that the high pressure transmitted to one of said first and second reaction chambers via its associated working chamber in response to the relative rotation of one of the rotary members in relation to the other opposes said relative rotation, said distributor also comprising a first control device (102 or 180) branched between the first working chamber and the first reaction chamber so as to limit the fluid pressure in the first reaction chamber to a predetermined value, and a second control device (102 or 174) branched between the second working chamber and the second reaction chamber so as to limit the fluid pressure in the second reaction chamber to the said maximal value.

2. A hydraulic distributor according to claim 1, characterized in that the rotary element is constituted by a first star-shaped rotor (80) comprising a central hub (90) solid in rotation with the input shaft (16) and a plurality of arms (22) projecting radially outwards from the hub, said rotor being mounted for rotation in a first disc-shaped cavity in the rotary member (22) connected to the output shaft (18), each of the spaces of the cavity between two consecutive arms being divided by a radial dividing arm (98) solid with the rotary member connected to the output shaft into two chambers (94, 96) constituting a first and a second reaction chambers, each of the first reaction chambers being capable of receiving a fluid pressure acting on the arms of the rotor so as to urge it into rotation in a first direction and each of the second reaction chambers being capable of receiving a fluid pressure acting on the arms of the rotor so as to urge the latter into rotation in the second direction.

3. A hydraulic rotary distributor according to claim 2, characterized in that the first rotary member is constituted by a second star-shaped rotor (20) comprising a central hub (40) solid in rotation with the input shaft (16) and a plurality of arms (42, 44) projecting radially outwards from the central hub, said rotor being mounted for rotation in a second disc-shaped cavity defined in the rotary member (22) connected to the output shaft (18), each of the spaces of the second cavity between two consecutive arms of the second rotor defining a working chamber (50 or 52), said working chambers being distributed angularly in such a way that two consecutive working chambers respectively constitute one of the first working chambers and one of the second working chambers.

4. A hydraulic rotary distributor according to claim 3, characterized in that two consecutive radial arms (42, 44) of the second rotor (20) have different lengths, so that the pressure prevailing in the working chamber edged by the two arms in response to a relative rotation of the first and second rotary members generates a torque acting on the second rotor.

5. A hydraulic rotary distributor according to claim 1, characterized in that the first rotary member and the rotary element are constituted by a single star-shaped rotor (140) which comprises a central hub (142) solid in rotation with the input shaft (16) and a plurality of arms (42, 44) projecting radially outwards from the hub, said rotor being mounted for rotation in a substantially disc-shaped cavity defined inside the second rotary member (22), said arms cooperating with the walls of the said cavity so as to define, firstly, a plurality of working chambers (50, 52) divided into a group of first working chambers and a group of second working chambers and, secondly, a plurality of reaction chambers (94, 96) also divided into a group of first reaction chambers and a group of second reaction chambers.

6. A hydraulic rotary distributor according to claim 5, characterized in that the arms of the star-shaped rotor divide the cavity into a plurality of spaces, some of these intermediate spaces being sealingly divided into two compartments defining a pair of reaction chambers by an arm (98) projecting radially into the cavity from the second rotary member (22), the other intermediate spaces forming the first and second working chambers distributed alternately around the hub.

7. A hydraulic rotary distributor according to claim 6, characterized in that each pair of working chambers is constituted by the respective intermediate spaces defined in the cavity and edged by a socalled central arm (44) and two socalled side arms (42) immediately adjacent to the central arm and situated on both sides of the latter.

8. A hydraulic rotary distributor according to claim 7, characterized in that each central arm (44) covers a high pressure orifice (62) in communication with the high pressure source and defined in the interior wall of the cavity, and in that each side arm (42) covers a low pressure orifice (54) also defined in the interior wall of the cavity and in communication with the low pressure source, the fluid communication between the working chambers on the one hand and the high and low pressure sources on the other hand being a function of the angular position of the star-shaped rotor (140) in the cavity.

9. A hydraulic rotary distributor according to claim 7 or 8, characterized in that the central arm (44) is shorter in length than the side arms (42) so that the high pressure of fluid at one or the other of the working chambers (50, 52) exerts a hydraulic reaction on the rotor.

10. A hydraulic rotary distributor according to one of claims 1 to 9, characterized in that the first and second control devices are respectively constituted, firstly, by a first cut-off valve (102, 162) disposed between the first working chamber (50) and the first reaction chamber (94) and, secondly, by a second cut-off valve (164) disposed between the second working chamber (52) and the second reaction chamber (96), said first and second cut-off valves being designed so as to interrupt the fluid communication between each working chamber and its associated reaction chamber when the pressure in one or the other of the working chambers is greater than said maximal value.

11. A hydraulic rotary distributor according to claim 10, characterized in that the maximal value is predetermined.

12. A hydraulic rotary distributor according to claim 10, characterized in that the maximal value is variable as a function of operating parameters of the vehicles.

13. A hydraulic rotary distributor according to claim 10, characterized in that the cut-off valves are incorporated into one (22) of the rotary members.

14. A hydraulic rotary distributor according to anyone of claims 5 to 9, characterized in that each control device is constituted by a fluid passage (170, 176) provided in the rotor and connecting a working chamber and the reaction chamber associated with it, said fluid passage comprising a constriction (172, 178) dividing said passage into an up-stream part situated between the working chamber and the constriction and a downstream part situated between the constriction and the reaction chamber, a leakage passage (174, 180) being defined from the downstream part of the fluid passage, said leakage passage normally being closed when the rotor occupies in relation to its non-operating position an angular position less than a given value, and being opened progressively so as to put the downstream part of the fluid passage in communication with the low pressure source as the angular position increases beyond the given value.

15. A hydraulic rotary distributor according to claims 14 and 8, characterized in that the leakage passage is constituted by a notch (174, 180) defined in one of the faces of the rotor, said notch being in communication with the downstream part of the fluid passage, and being capable of covering over the low pressure orifice (54) defined in the wall of the cavity as the angular position increases beyond the given value, so as to allow a leakage of fluid to the low pressure orifice.

16. A hydraulic rotary distributor according to claim 15, characterized in that a chamber is formed in the notch so as to modulate the section of the leakage passage as a function of the angular position of the rotor.

17. A hydraulic rotary distributor according to claim 1, characterized in that said first and second control devices are outside said housing (12) of said distributor and connected to the latter by external ducts.

**Ansprüche**

1. Hydraulisches Drehschieberventil zur Verwendung in einer Servolenkung, mit einem Gehäuse (12), in dessen Innerem ein erstes drehbares Steuerteil (20), welches mit einer Eingangswelle (16) verbunden ist, und ein hierzu koaxiales zweites drehbares Steuerteil (22), welches mit einer Ausgangswelle (18) verbunden ist, angeordnet sind, zwischen welchen Steuerteilen (20, 22) zumindest zwei Arbeitskammern (50, 52) begrenzt sind, darunter eine erste Arbeitskammer, die mit einem ersten Arbeitsraum eines doppelt wirkenden hydraulischen Motors verbindbar ist, und eine zweite Arbeitskammer, welche mit einem zweiten Arbeitsraum dieses Motors verbindbar ist, wobei das Drehschieberventil auf eine Relativverdrehung des einen Steuerteils

zum anderen Steuerteil aus einer Ruhestellung heraus so anspricht, daß es die erste bzw. die zweite der Arbeitskammern mit einer Hochdruckquelle verbindet und die andere der Arbeitskammern mit einer Niederdruckquelle verbindet, dadurch gekennzeichnet, daß zumindest ein Rotor (80 bzw. 140) drehfest mit der Eingangswelle oder der Ausgangswelle verbunden ist und zusammen mit demjenigen Steuerteil, welches mit der Ausgangswelle bzw. der Eingangswelle verbunden ist, zumindest ein Paar von Reaktionskammern (94, 96) begrenzt, darunter eine erste Reaktionskammer, die mit der ersten Arbeitskammer verbunden ist, und eine zweite Reaktionskammer, die mit der zweiten Arbeitskammer verbunden ist, wobei die Reaktionskammern derart angeordnet sind, daß der hohe Druck, mit welchem die erste oder zweite Reaktionskammer über die zugeordnete Arbeitskammer bei einer Relativverdrehung der Steuerteile gegeneinander beaufschlagt ist, dieser Relativverdrehung entgegenwirkt, daß eine erste Steuereinrichtung (102 bzw. 180) zwischen die erste Arbeitskammer und die erste Reaktionskammer geschaltet ist, um den Druck in der ersten Reaktionskammer auf einen vorgegebenen Wert zu begrenzen, und daß eine zweite Steuereinrichtung (102 bzw. 174) zwischen die zweite Arbeitskammer und die zweite Reaktionskammer geschaltet ist, um den Druck des in der zweiten Reaktionskammer befindlichen fluidischen Arbeitsmittels auf den vorgegebenen Maximalwert zu begrenzen.

2. Drehschieberventil nach Anspruch 1, dadurch gekennzeichnet, daß der Roror ein erstes sternförmiges Rotorteil (80) aufweist, zu welchem ein zentrales Nabenteil (90), das drehfest mit der Eingangswelle (16) verbunden ist, und eine Mehrzahl von Armen (92) gehören, die in radialer Richtung nach außen vom Nabenteil überstehen, wobei dieses Rotorteil drehbar in einem ersten scheibenförmigen Hohlraum desjenigen Steuerteils (22) angeordnet ist, welches mit der Ausgangswelle (18) verbunden ist, daß ein jeder der Unterräume des Hohlraumes, welcher zwischen zwei aufeinanderfolgenden Armen des Rotorteils liegt, durch einen radialen Trennarm (98), der drehfest mit dem mit der Ausgangswelle verbundenen Steuerteil verbunden ist, in zwei Kammern (94, 96) unterteilt ist, welche eine erste und eine zweite Reaktionskammer darstellen, wobei eine jede der ersten Reaktionskammern so mit auf die Arme des Rotorteiles einwirkendem Druck beaufschlagbar ist, daß dieses Rotorteil in einer ersten Richtung mit Drehmoment beaufschlagt wird, und eine jede der zweiten Reaktionskammern so mit auf die Arme des Rotorteiles einwirkendem Druck beaufschlagbar ist, daß das Rotorteil in der zweiten Drehrichtung mit Drehmoment beaufschlagt ist.

3. Drehschieberventil nach Anspruch 2, dadurch gekennzeichnet, daß das erste Steuerteil durch ein zweites sternförmiges Rotorteil (20) gebildet ist, welches ein zentrales, drehfest mit der Eingangswelle (16) verbundenes Nabenteil (40) und eine Mehrzahl von Armen (42, 44) aufweist, welche in radialer Richtung nach außen von dem zentralen Nabenteil überstehen, wobei dieses Rotorteil drehbar in einem zweiten scheibenförmigen Hohlraum angeordnet ist, der in dem mit der Ausgangswelle (18) verbundenen drehbaren Steuerteil (22) ausgebildet ist, und wobei ein jeder der Unterräume des zweiten Hohlraumes, welcher zwischen zwei aufeinanderfolgenden Armen des zweiten Rotorteiles liegt, eine Arbeitskammer (50 bzw. 52) begrenzt, welche Arbeitskammern derart in Winkelrichtung verteilt angeordnet sind, daß die beiden aufeinanderfolgenden Arbeitskammern eine der ersten Arbeitskammer bzw. eine der zweiten Arbeitskammern darstellen.

4. Drehschieberventil nach Anspruch 3, dadurch gekennzeichnet, daß zwei aufeinanderfolgende radiale Arme (42, 44) des zweiten Rotorteiles (20) unterschiedliche Länge aufweisen, derart, daß der Druck in der durch diese beiden Arme begrenzten Arbeitskammer bei einer Relativverdrehung zwischen dem ersten und zweiten Steuerteil ein Drehmoment auf das zweite Rotorteil ausübt.

5. Drehschieberventil nach Anspruch 1, dadurch gekennzeichnet, daß das erste drehbare Steuerteil und der Rotor durch ein einstückiges sternförmiges Rotorteil (140) gebildet sind, welches ein drehfest mit der Eingangswelle (16) verbundenes zentrales Nabenteil (142) und eine Mehrzahl in radialer Richtung vom Nabenteil nach außen vorspringender Arme (42, 44) aufweist, wobei dieses Rotorteil drehbar in einem im wesentlichen scheibenförmigen Hohlraum angeordnet ist, der im Inneren des zweiten drehbaren Steuerteiles (22) ausgebildet ist, und wobei dieser Hohlraum einerseits eine Mehrzahl von Arbeitskammern (50, 52), die in eine Gruppe erster Arbeitskammern und eine Gruppe zweiter Arbeitskammern unterteilt sind, und andererseits eine Mehrzahl von Reaktionskammern (94, 96) begrenzt, die ebenfalls in eine Gruppe erster Reaktionskammern und eine Gruppe zweiter Reaktionskammern unterteilt sind.

6. Drehschieberventil nach Anspruch 5, dadurch gekennzeichnet, daß die Arme des sternförmigen Rotors den Hohlraum in eine Vielzahl von Unterräumen unterteilen, wobei einige dieser dazwischenliegenden Unterräume durch einen vom zweiten drehbaren Steuerteil (22) in radialer Richtung in den Hohlraum vorspringenden Arm (98) in zwei Abteile unterteilt sind, welche ein Reaktionskammerpaar bilden, und wobei die anderen der dazwischenliegenden Unterräume die ersten und zweiten Arbeitskammern bilden, welche abwechselnd aufeinanderfolgend um das Nebenteil herum angeordnet sind.

7. Drehschieberventil nach Anspruch 6, dadurch gekennzeichnet, daß jedes Paar von Arbeitskammern durch die dazwischenliegenden Unterräume gebildet sind, welche jeweils in dem Hohlraum liegen und durch einen sogenannten zentralen Arm (44) und zwei sogenannte seitliche Arme (42) begrenzt sind, welch letztere dem zentralen Arm unmittelbar benachbart sind und zu beiden Seiten des letzteren liegen.

8. Drehschieberventil nach Anspruch 7, dadurch gekennzeichnet, daß ein jeder der zentralen Arme (44) eine Hochdrucköffnung (62) überdeckt, die mit der Hochdruckquelle in Verbindung steht und in der Innenwand des Hohlraumes ausgebildet ist, und daß ein jeder der seitlichen Arme (42) eine Niederdrucköffnung (54) überdeckt, die ebenfalls in der Innenwand des Hohlraumes ausgebildet ist und mit der Niederdruckquelle in Verbindung steht, wobei das Bestehen einer Druckmittelverbindung zwischen den Arbeitskammern einerseits und der Hochdruckquelle und der Niederdruckquelle andererseits von der Winkelstellung des sternförmig ausgebildeten Rotorteils (140) im Hohlraum abhängt.

9. Drehschieberventil nach Anspruch 7 oder 8, dadurch gekennzeichnet, daß der zentrale Arm (44) eine kleinere Länge als die seitlichen Arme (42) aufweist, so daß der hohe Druck der einen oder der anderen der Arbeitskammern (50, 52) zugeführten Druckmittels auf das Rotorteil eine hydraulische Reaktionskraft ausübt.

10. Drehschieberventil nach einem der Ansprüche 1 bis 9, dadurch gekennzeichnet, daß die erste und zweite Steuereinrichtung gebildet sind durch ein erstes Trennventil (102, 162), welches zwischen der ersten Arbeitskammer (50) und der ersten Reaktionskammer (94) angeordnet ist, und durch ein zweites Trennventil (164), welches zwischen den zweiten Arbeitskammer (52) und der zweiten Reaktionskammer (96) angeordnet ist, wobei das erste und zweite Trennventil die Strömungsmittelverbindung zwischen einer jeden der Arbeitskammern und der ihr zugeordneten Reaktionskammer dann unterbricht, wenn der Druck in der einen oder der anderen der Arbeitskammern höher ist als der vorgegebene Maximaldruck.

11. Drehschieberventil nach Anspruch 10, dadurch gekennzeichnet, daß der Maximaldruckwert fest vorgegeben ist.

12. Drehschieberventil nach Anspruch 10, dadurch gekennzeichnet, daß der maximale Druckwert in Abhängigkeit von Betriebsparametern des Fahzeuges variabel ist.

13. Drehschieberventil nach Anspruch 10, dadurch gekennzeichnet, daß die Trennventile in eines (22) der drehbaren Steuerteile integriert sind.

14. Drehschieberventil nach einem der Ansprüche 5 bis 9, dadurch gekennzeichnet, daß eine jede der Steuereinrichtungen einen Druckmittelkanal (170, 176) aufweist, der in dem Rotor ausgebildet ist und eine Arbeitskammer und eine dieser zugeordnete Reaktionskammer miteinander verbindet und in welchem eine Drosselstelle (172, 178) angeordnet ist, durch welche der Kanal in einen zwischen der Arbeitskammer und der Drosselstelle liegenden stromaufseitigen Abschnitt und einen zwischen der Drosselstelle und der Reaktionskammer liegenden stromabseitigen Abschnitt unterteilt wird, daß ein Entlastungskanal (174, 180) von dem stromabseitigen Abschnitt des Druckmittelkanals ausgeht, der normalerweise verschlossen ist, wenn der Rotor aus seiner Ruhestellung um einen Winkel herausgedreht ist, der kleiner ist als ein vorgegebener Wert, und der progressiv geöffnet wird, wenn die winkelmäßige Auslenkung des Rotors über den vorgegebenen Wert hinausgeht, so daß der stromabseitige Abschnitt des Druckmittelkanals in Strömungsverbindung zur Niederdruckquelle gebracht wird.

15. Drehschieberventil nach Anspruch 14 in Verbindung mit Anspruch 8, dadurch gekennzeichnet, daß der Druckentlastungskanal durch eine Ausnehmung (174, 180) in einer der Stirnflächen des Rotors gebildet ist, die in Strömungsverbindung mit dem stromabseitigen Abschnitt des Druckmittelkanals steht und die in eine Stellung bewegbar ist, in welcher sie die in der Wand des Hohlraumes ausgebildete Niederdrucköffnung (54) zunehmend überdeckt, wenn die winkelmäßige Auslenkung des Rotors den vorgegebenen Wert überschreitet, so daß eine Druckentlastung von Arbeitsmittel zu der Niederdrucköffnung hin erfolgt.

16. Drehschieberventil nach Anspruch 15, dadurch gekennzeichnet, daß die Ausnehmung schräg geneigte Wände aufweist, um den Durchtrittsquerschnitt des Druckentlastungskanals in Abhängigkeit von der Winkelstellung des Rotors zu modulieren.

17. Drehschieberventil nach Anspruch 1, dadurch gekennzeichnet, daß die erste und zweite Steuereinrichtung (102) außerhalb des Gehäuses (12) angeordnet sind und mit dem letzteren durch externe Leitungen verbunden sind.

FIG.1

FIG.2

FIG.3

FIG.4

FIG.5

FIG. 6

FIG. 7

FIG.8

FIG.9

FIG.10

FIG.11

12

118
118
28
164
162
108
108
114
112
114
16

118  105  110  114

FIG.12

120
116

FIG.13

FIG. 14